# EUROPEAN PATENT APPLICATION

(11) **EP 3 220 324 A1**
(43) Date of publication of application: **20.09.2017**
(21) Application number: 15858223.9
(22) Date of filing: 10.11.2015
(51) Int. Cl.: G06Q 10/04, G06Q 50/26

(54) **MODEL SUMMARIZING DEVICE, EVACUATION PREDICTION SYSTEM, SUMMARIZED MODEL GENERATING DEVICE, SUMMARIZING METHOD, AND COMPUTER-READABLE RECORDING MEDIUM**

(30) Priority: 14.11.2014 JP 2014231391
(71) Applicant: NEC Corporation, Tokyo 108-8001 (JP)
(72) Inventor: TADANO, Kumiko, Tokyo 108-8001 (JP)
(74) Representative: Vossius & Partner Patentanwälte Rechtsanwälte mbB
(86) International application number: PCT/JP2015/005613
(87) International publication number: WO 2016/075932

(57) **Abstract**

Provided is a model summarizing device, etc. that makes it easy to predict the time required until evacuees complete evacuation.

A model summarizing device according to an embodiment of the present invention includes model receiving means for receiving an evacuation model including evacuation information relating to an evacuation route for an evacuee, recovery information relating to recovery timing at a site where a trouble occurred on the evacuation route, and a relation between the evacuation information and the evacuation information, and summarizing means for summarizing information included in the evacuation model based on a predetermined condition relating to the evacuation information or the recovery information.

## Description

### [Technical Field]

The present invention relates to a model summarizing device, an evacuation prediction system, a summarized model generating device, a summarizing method, and a computer-readable recording medium.

### [Background Art]

When a disaster occurs, there is a possibility that disaster victims who have suffered from the disaster are forced to evacuate from an area hit by the disaster. In such a case, it is desirable that the time required for the disaster victims who are required to evacuate (hereinafter referred to as "evacuees") to complete evacuation be as short as possible.

On the other hand, when a disaster occurs, a road network and the like that serve as evacuation paths sometimes suffer from the disaster and a road fault may occur. In this case, there is a possibility that the evacuation paths becomes unable to pass. Therefore, when an evacuation plan for evacuees is drawn up, there may be a case such that the state of damages and a recovery plan relating to the evacuation paths need to be considered. In addition, when a road network and the like that serve as evacuation paths are damaged by a disaster, there may be a case such that a recovery plan from a road fault having occurred to the road network and the like need to be drawn up so that the time required for disaster victims to evacuate becomes short. Furthermore, it is preferable that a recovery plan from troubles that have occurred to the road network and the like be made quickly because the evacuees are required to be evacuated promptly.

In PTL 1, an evacuation plan evaluation system and the like are disclosed. In the evacuation plan evaluation system disclosed in PTL 1, a support-requiring person count calculation unit calculates the number of persons who need support in evacuation based on attribute information of users of mobile terminals. In addition, an evacuation destination-classified evacuee count calculation unit calculates the number of evacuees who evacuate to their homes and an evacuation center. Furthermore, a simulation unit simulates for a case in which evacuees evacuate to their homes and the evacuation center from respective polygonal regions. Subsequently, a score calculation unit calculates scores for an evacuation plan based on the number of persons who need support, the number of evacuees, and a simulation result.

In PTL 2, a data processing device that is capable of predicting a destination even when there is a loss of current position data that are acquired in real time, is disclosed.

In PTL 3, an evacuation time prediction device that predicts evacuation time from a multistory building with stairs is disclosed.

### [Citation List]

### [Patent Literature]

[PTL 1] Japanese Unexamined Patent Application Publication Laid-open No. 2012-83908 A
[PTL 2] Japanese Unexamined Patent Application Publication Laid-open No. 2012-108748 A
[PTL 3] Japanese Unexamined Patent Application Publication Laid-open No. 2012-27560 A

### [Summary of Invention]

### [Technical Problem]

The evacuation plan evaluation system disclosed in PTL 1 and other references do not necessarily take the size of a model used in simulation into consideration. Therefore, when evacuation paths are complicated such as the distances of evacuation paths being long, a plurality of evacuation paths being expected to be used and other cases, the evacuation plan evaluation system disclosed in PTL 1 may have a difficulty in predicting the time required for evacuation.

The present invention is accomplished to solve the above-described problem, and a principal object of the present invention is to provide a model summarizing device and others that may facilitate prediction of the time required for evacuees to finish evacuation.

### [Solution to Problem]

A model summarizing device in one aspect of the present invention includes model receiving means for receiving an evacuation model including evacuation information relating to an evacuation route for an evacuee, recovery information relating to recovery timing at a site where a trouble occurred on the evacuation route, and a relation between the evacuation information and the evacuation information, and summarizing means for summarizing information included in the evacuation model based on a predetermined condition relating to the evacuation information or the recovery information.

A summarizing method in one aspect of the present invention includes receiving an evacuation model including evacuation information relating to an evacuation route for an evacuee, recovery information relating to recovery timing at a site where a trouble occurred on the evacuation route, and a relation between the evacuation information and the evacuation information, and summarizing information included in the evacuation model based on a predetermined condition relating to the evacuation information or the recovery information.

A computer-readable recording medium in one aspect of the present invention non-transitorily storing a program causing a computer to execute a process of receiving an evacuation model including evacuation information relating to an evacuation route for an evacuee, recovery information relating to recovery timing at a site where a trouble occurred on the evacuation route, and a relation between the evacuation information and the evacuation information; and a process of summarizing information included in the evacuation model based on a predetermined condition relating to the evacuation information or the recovery information.

### [Advantageous Effects of Invention]

According to the present invention, a model summarizing device and others that may facilitate prediction of the time required for evacuees to finish evacuation may be provided.

### [Advantageous Effects of Invention]

[Fig. 1] Fig. 1 is a diagram illustrating a configuration of a model summarizing device in a first example embodiment of the present invention;
[Fig. 2] Fig. 2 is a diagram illustrating a configuration of an evacuation prediction system that includes the model summarizing device in the first example embodiment of the present invention;
[Fig. 3] Fig. 3 is a diagram illustrating an example of an evacuation model that the model summarizing device in the first example embodiment of the present invention receives;
[Fig. 4] Fig. 4 is a diagram illustrating an example of evacuation paths and the like that are represented by the evacuation model that the model summarizing device in the first example embodiment of the present invention receives;
[Fig. 5] Fig. 5 is a diagram illustrating an example of the evacuation paths and the like that are represented by the evacuation model that the model summarizing device in the first example embodiment of the present invention receives;
[Fig. 6] Fig. 6 is a diagram illustrating an example relating to relation information in the evacuation model that the model summarizing device in the first example embodiment of the present invention receives;
[Fig. 7] Fig. 7 is a diagram illustrating another example of the evacuation model that the model summarizing device in the first example embodiment of the present invention receives;
[Fig. 8] Fig. 8 is a diagram illustrating an example of the evacuation model that is summarized by the model summarizing device in the first example embodiment of the present invention;
[Fig. 9] Fig. 9 is a diagram illustrating another example of the evacuation model that is summarized by the model summarizing device in the first example embodiment of the present invention;
[Fig. 10] Fig. 10 is a diagram illustrating another example of the evacuation model that is summarized by the model summarizing device in the first example embodiment of the present invention;
[Fig. 11] Fig. 11 is a flowchart illustrating an operation of the model summarizing device in the first example embodiment of the present invention;
[Fig. 12] Fig. 12 is a diagram illustrating a configuration of a variation of the evacuation prediction system in the first example embodiment of the present invention;
[Fig. 13] Fig. 13 is a diagram illustrating a configuration of a variation of the evacuation prediction system and a summarized model generating device in the first example embodiment of the present invention; and

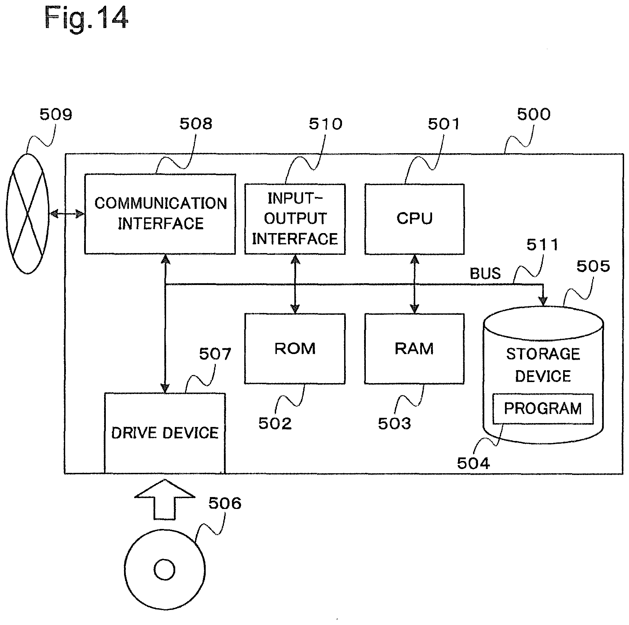

[Fig. 14] Fig. 14 is a diagram illustrating an example of an information processing device that achieves the model summarizing devices and the like in the respective example embodiments of the present invention.

### [Description of Embodiments]

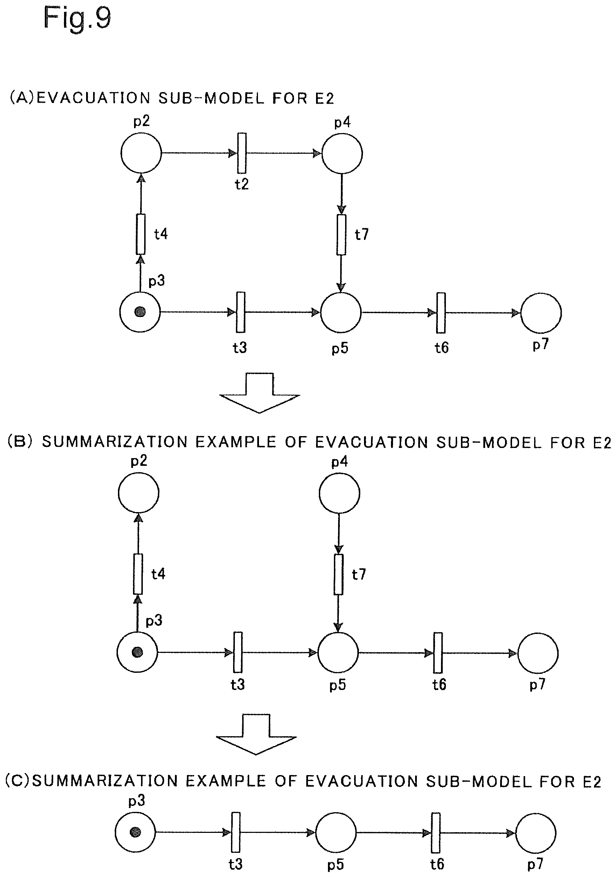

Respective example embodiments of the present invention will be described with reference to the accompanying drawings. In the respective example embodiments of the present invention, each component in respective devices exhibits a block in a functional unit. Each component in the respective devices may be implemented by any combination of, for example, an information processing device 500 as illustrated in Fig. 9 and software. As an example, the information processing device 500 includes a configuration as described below.

- A CPU (Central Processing Unit) 501
- ROM (Read Only Memory) 502
- RAM (Random Access Memory) 503
- A program 504 loaded into the RAM 503
- A storage device 505 storing the program 504
- A drive device 507 performing reading and writing from/to a storage medium 506
- A communication interface 508 connecting to a communication network 509
- An input-output interface 510 performing inputting and outputting of data
- A bus 511 connecting the respective components Methods for implementing the respective devices include various modifications. For example, each device may be achieved as a dedicated device. Each device may also be implemented by a combination of a plurality of devices.

In the drawings illustrating the configurations of respective devices and respective systems, the directions of arrows in the drawings only illustrate an example and do not limit the directions of signals exchanged among the components.

### (First Example Embodiment)

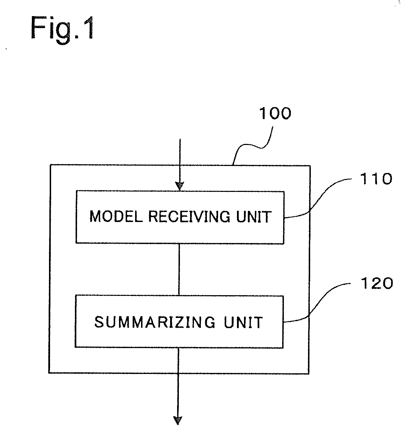

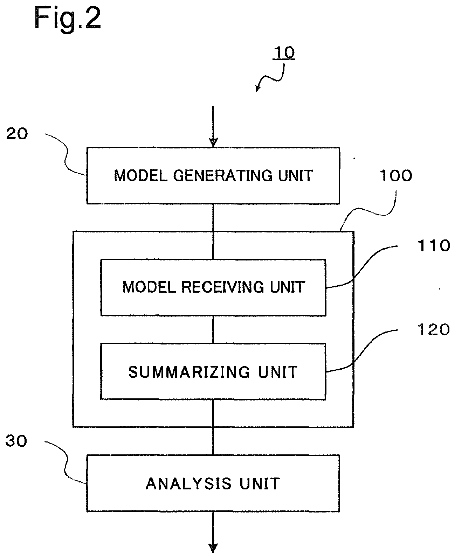

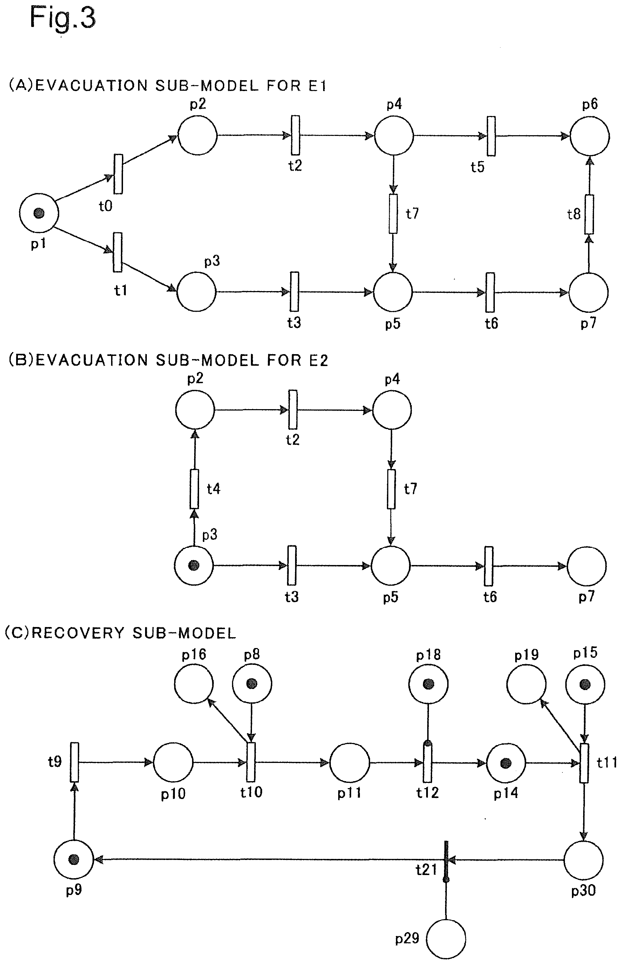

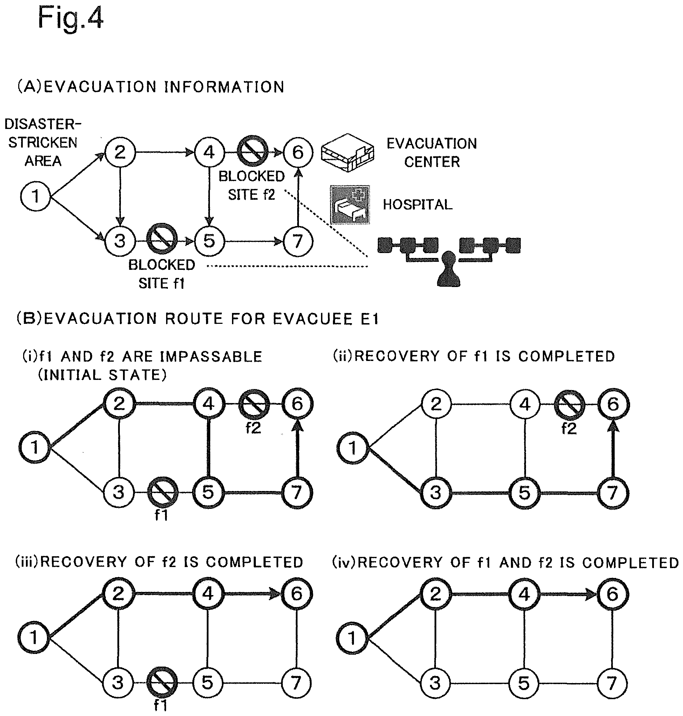

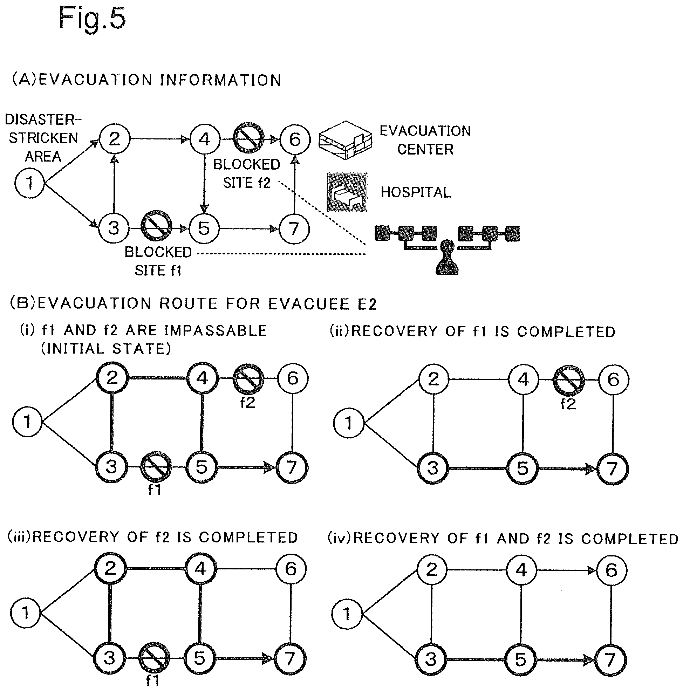

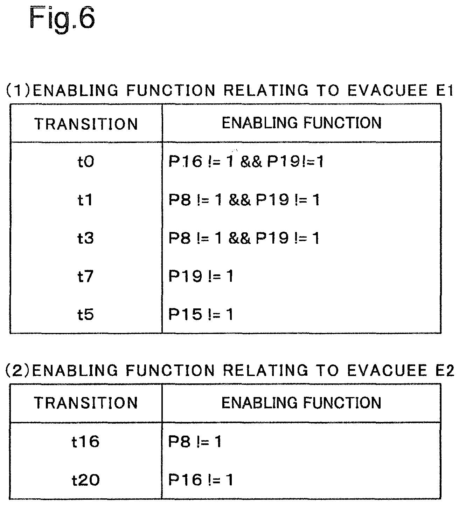

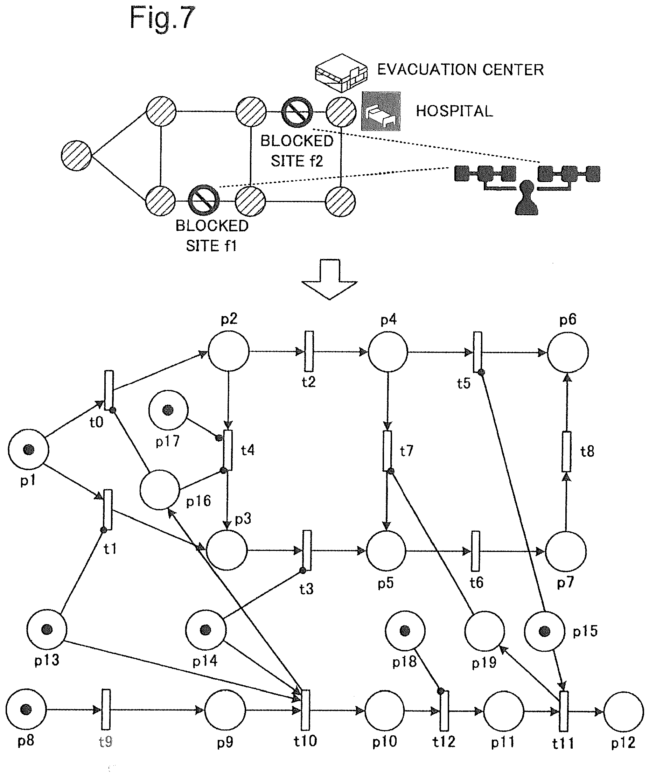

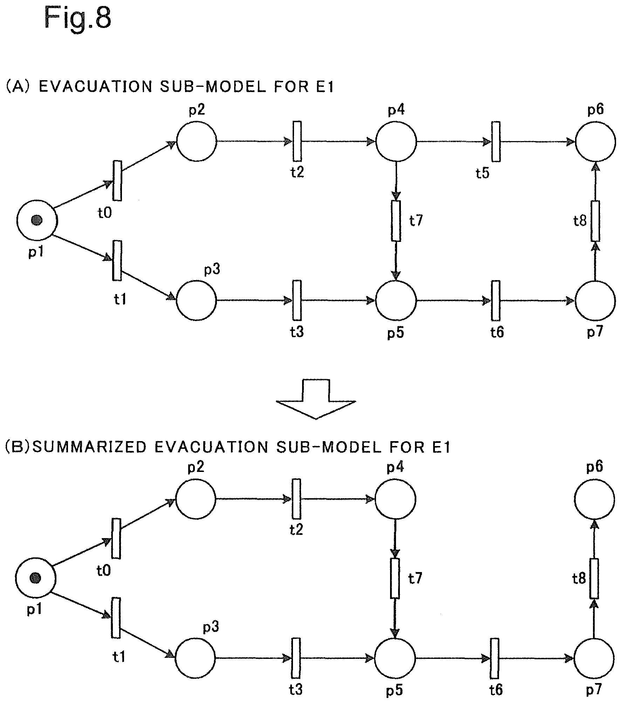

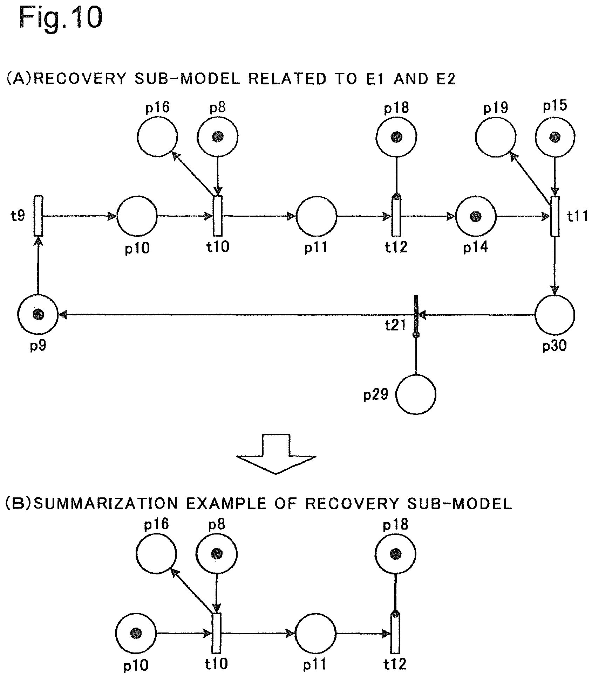

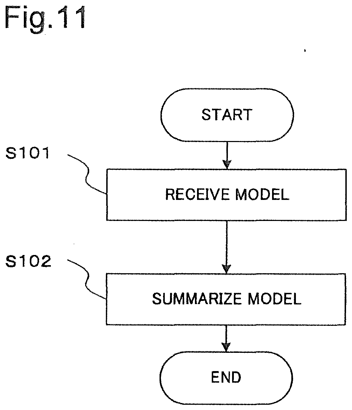

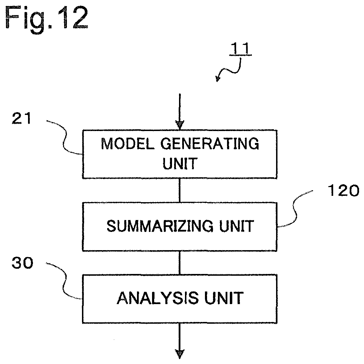

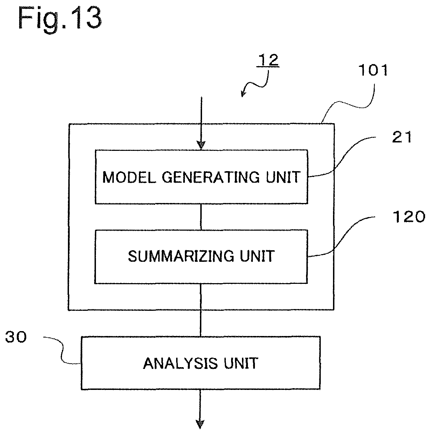

First, a first example embodiment of the present invention will be described. Fig. 1 is a diagram illustrating a configuration of a model summarizing device in the first example embodiment of the present invention. Fig. 2 is a diagram illustrating a configuration of an evacuation prediction system that includes the model summarizing device in the first example embodiment of the present invention. Fig. 3 is a diagram illustrating an example of an evacuation model that the model summarizing device in the first example embodiment of the present invention receives. Fig. 4 is a diagram illustrating an example of evacuation paths and the like that are represented by the evacuation model that the model summarizing device in the first example embodiment of the present invention receives. Fig. 5 is a diagram illustrating an example of the evacuation paths and the like that are represented by the evacuation model that the model summarizing device in the first example embodiment of the present invention receives. Fig. 6 is a diagram illustrating an example relating to relation information in the evacuation model that the model summarizing device in the first example embodiment of the present invention receives. Fig. 7 is a diagram illustrating another example of the evacuation model that the model summarizing device in the first example embodiment of the present invention receives. Fig. 8 is a diagram illustrating an example of the evacuation model that is summarized by the model summarizing device in the first example embodiment of the present invention. Fig. 9 is a diagram illustrating another example of the evacuation model that is summarized by the model summarizing device in the first example embodiment of the present invention. Fig. 10 is diagram illustrating another example of the evacuation model that is summarized by the model summarizing device in the first example embodiment of the present invention. Fig. 11 is a flowchart illustrating an operation of the model summarizing device in the first example embodiment of the present invention. Fig. 12 is a diagram illustrating a configuration of a variation of the evacuation prediction system in the first example embodiment of the present invention. Fig. 13 is a diagram illustrating a configuration of a variation of the evacuation prediction system and a summarized model generating device in the first example embodiment of the present invention.

As illustrated in Fig. 1, a model summarizing device 100 in the first example embodiment of the present invention includes a model receiving unit 110 and a summarizing unit 120. The model receiving unit 110 receives an evacuation model that includes evacuation information relating to evacuation paths for evacuees, recovery information relating to recovery timing at a site where a trouble has occurred in the evacuation paths, and a relation between the evacuation information and the evacuation information. The summarizing unit 120 summarizes the evacuation model based on a predetermined condition relating to the evacuation information or the recovery information.

As illustrated in Fig. 2, in the present example embodiment, an evacuation prediction system 10 that includes a model generating unit 20, the model summarizing device 100 which is described above, and an analysis unit 30 can be configured. The model generating unit 20 generates an evacuation model based on the above-described evacuation information and the recovery information. The analysis unit 30 predicts time required for the evacuees to evacuate by using an evacuation model summarized by the model summarizing device 100.

Next, a configuration of the model summarizing device 100 in the present example embodiment will be described. First, the model receiving unit 110 will be described. The model receiving unit 110 receives an evacuation model including the evacuation information, the recovery information, and a relation therebetween, as described above. The evacuation model is, for example, generated by the model generating unit 20 which is included in the evacuation prediction system 10. However, the evacuation model may be generated by an entity other than the model generating unit 20, such as generated directly by a person who is to obtain the time required for evacuees to evacuate.

The model receiving unit 110 may receive an evacuation model that represents evacuation information, recovery information, and a relation therebetween in a single model. The model receiving unit 110 may also receive an evacuation model that represents the evacuation information, the recovery information, and the relation therebetween in a plurality of separate sub-models and the like. In one example, an evacuation model is represented as an evacuation sub-model representing evacuation information, a recovery sub-model representing the recovery information, and the relation information representing the relation between the evacuation sub-model and the recovery sub-model.

In the model summarizing device 100 of the present example embodiment, the model receiving unit 110, for example, receives a model that is described using a stochastic time Petri net (hereinafter referred to as "sTPN").

As an example, an sTPN is represented as a tuple <P, T, A-, A+, A, m0, EFT, LFT, F, C, E, L>. The respective elements of the tuple are represented by a predetermined drawing (not illustrated). P is a set of places. In a drawing illustrating an sTPN, a place is represented by an unfilled circle. T is a set of transitions. In a drawing illustrating an sTPN, a transition is represented by an unfilled rectangle or a bar. A-denotes input arcs each of which connects a place and a transition in a direction from the place to the transition. A+ denotes output arcs each of which connects a place and a transition in a direction from the transition to the place. In the following description, input arcs and output arcs may be simply referred to as arcs in a collective manner. In a drawing illustrating an sTPN, an arc is represented by an arrow. A. denotes inhibitor arcs each of which connects a place and a transition in a direction from the place to the transition. In a drawing illustrating an sTPN, an inhibitor arc is represented by an arrow with a circular tip.

In addition, m0 is an initial marking representing the non-negative numbers of tokens at the respective places. In a drawing illustrating an sTPN, a token is represented by a black dot placed inside a place. EFT and LFT respectively are earliest firing time and latest firing time at the respective transitions included in T, respectively. EFT is a non-negative real number including zero. LFT is a non-negative real number, including zero and infinity. A value of LFT is equal to or larger than a corresponding value of EFT. F denotes cumulative distribution functions of firing times of the respective transitions included in T. The firing times are located between EFT and LFT.

C denotes weights each of which, represents the probability of firing relating to one of a plurality of transitions that are enabled to fire when the plurality of transitions are enabled to fire simultaneously,. C is assigned to transitions that may be enabled to fire simultaneously. E denotes enabling functions that are associated with markings for the respective transitions included in T. L (flushing functions) is assigned to transitions. When a transition to which L is assigned fires, a token in a place that is related with the transition by L is flushed regardless of whether the place has a connection relation by an arc with the transition.

A transition is assumed to be firable when the following conditions are satisfied. When the transition fires, a token is removed from a place connected to the transition via an input arc, and a token is added to a place connected to the transitions via an output arc.
- One or more tokens exist in all the places connected to the transition via input arcs.
- No token exists in any of the places connected to the transition via inhibitor arcs.
- The time is larger than the value of EFT and smaller than the value of LFT.
- An associated enabling function becomes true.

Details of the sTPN are described in, for example, "Vicario, E., Sassoli, L., and Carnevali, L. (2009) 'Using stochastic state classes in quantitative evaluation of dense-time reactive systems', IEEE Transactions on Software Engineering, Vol. 35, No. 5, pp. 703-719." and other references.

Using Fig. 3, an example of an evacuation model that the model receiving unit 110 receives will be described below. In the example, the evacuation model is represented separately in an evacuation sub-model, a recovery sub-model, and relation information, using sTPN.

Fig. 3 (A) illustrates an example of the evacuation sub-model. The evacuation sub-model, illustrated in Fig. 3 (A), is generated based on evacuation information relating to an evacuee E1 illustrated in Fig. 4. The evacuation information includes, for example, geographical information related to evacuation paths and other paths that are a road network and others that evacuees may pass in evacuation, an evacuation origin and an evacuation destination, and information relating to evacuation routes that are routes that the evacuees may pass depending on recovery status of the evacuation paths.

Among the evacuation information, the geographical information is represented in a form as, for example, a directed graph illustrated in Fig. 4 (A). In the graph, areas and locations at which the evacuees may stay are indicated as nodes. For example, an area indicated by a node with a number 1 or 2 is a disaster-stricken area. An area indicated by a node with a number 6 or 7 is an area that serves as an evacuation destination candidate.

In the graph, a road network that connects areas at which the evacuees may stay to one another and may serve as evacuation paths is indicated by arrows as links. The directions of the arrows are determined in accordance with directions in which the evacuees evacuate and the like. When there is a site where a trouble has occurred on the road network (hereinafter referred to as "trouble occurrence site"), information indicating the occurrence of trouble is provided to a position corresponding to the trouble occurrence site on an arrow as needed basis. In the example illustrated in Fig. 4 (A), it is assumed that troubles have occurred at two sites f1 and f2 in the road network and the two sites are impassable.

Among the evacuation information, the evacuation origin, the evacuation destination, and the information relating to the evacuation routes are represented as in Fig. 4 (B). Fig. 4 (B) illustrates an evacuation origin, an evacuation destination, and information relating to evacuation routes with respect to the evacuee E1. In this example, the evacuee E1 is assumed to evacuate from the area corresponding to the node with number 1 to the area corresponding to the node with number 6 in Fig. 4 (A). The evacuee E1 is also assumed to evacuate using one of evacuation routes illustrated in (i) to (iv) in Fig. 4 (B) depending on recovery status at f1 and f2, which are trouble occurrence sites.

In the evacuation sub-model illustrated in Fig. 3 (A), places p1 to p7 respectively correspond to nodes 1 to 7 with the same numbers illustrated in Fig. 4 (A). In the evacuation sub-model illustrated in Fig. 3, transitions t0 to t3 and t5 to t8 and arcs connected to the transitions correspond to the arrows illustrated in Fig. 4 (A).

Fig. 3 (B) illustrates another example of the evacuation sub-model. The evacuation sub-model illustrated in Fig. 3 (B) is generated based on evacuation information relating to evacuee E2 illustrated in Fig. 5. In this example, geographical information is the same as that in the example relating to the evacuee E1. As illustrated in Fig. 5 (B), the evacuee E2 is assumed to evacuate from an area corresponding to a node with number 3 is assigned to the area corresponding to the node with number 7 is assigned in Fig. 5 (A). The evacuee E2 is assumed to evacuate using one of evacuation routes illustrated in (i) to (iv) in Fig. 5 (B) depending on recovery status at f1 and f2, which are trouble occurrence sites.

In the evacuation sub-model illustrated in Fig. 3 (B), places p1 to p7 respectively correspond to the nodes 1 to 7 with the same numbers illustrated in Fig. 5, as with the evacuation sub-model illustrated in Fig. 3 (A). In the evacuation sub-model illustrated in Fig. 3 (B), the transitions t2 to t4, t6, and t7 and arcs connected to the transitions correspond to arrows illustrated in Fig. 5 (A).

In addition to the above, the evacuation information includes information relating to the time required for evacuation, such as transit time to pass each evacuation path, the number of evacuees whom each area is capable of accommodating, the capacity of each evacuation path (for example, the number of persons who are able to pass per unit of time), and other information, which is not-illustrated.

Fig. 3 (C) illustrates an example of the recovery sub-model. The recovery sub-model illustrated in Fig. 3 (C) is generated with respect to the evacuation routes for the evacuee E1 in Fig. 4 and the evacuee E2 illustrated in Fig. 5. In the evacuation sub-model illustrated in Fig. 3 (C), the evacuation sub-model is generated assuming that, with respect to the trouble occurrence sites f1 and f2 illustrated in Fig. 4 or Fig. 5, f2 is recovered first and subsequently f1 is recovered.

In the present example embodiment, a recovery sub-model is, in general, generated based on recovery information relating to evacuation paths for evacuees. The recovery information includes, for example, operations for recovery and a sequence thereof. The operations for recovery include, for example, recovery work itself at a trouble occurrence site and movements of a recovery resource engaging in the recovery. The sequences of recovery include a case in which a single recovery resource carries out recovery sequentially and a case in which a plurality of recovery resources carries out recovery in parallel. The recovery information also includes information relating to not-illustrated changes in the time required for evacuation, such as a change in the time required to pass an evacuation path and a change in the capacity of an evacuation path, depending on information of a trouble.

Fig. 6 illustrates an example of relation information in the case of using sTPN for representing the evacuation sub-models and the recovery sub-model. The relation information illustrated in Fig. 6 is generated with respect to the evacuee E1 in Fig. 4 and the evacuee E2 illustrated in Fig. 5. Regarding the evacuee E1, the relation information is generated using an enabling function of the sTPN so that a transition that is enabled to fire in the recovery sub-model is changed depending on recovery status at f1 and f2, which are trouble occurrence sites. Regarding the evacuee E2, the relation information is generated using enabling functions of the sTPN so that a transition that becomes enabled in the recovery sub-model is changed depending on the recovery status at f1, which is a trouble occurrence site.

The model receiving unit 110 may receive an evacuation model that represents the evacuation information, the recovery information, and the relation therebetween in a single model, as described afore. When the respective kinds of information are represented in a single sTPN in the above-described example, the evacuation model is represented as illustrated in Fig. 7, for example. The model receiving unit 110 may also receive such a model.

Next, the summarizing unit 120 will be described. As described above, the summarizing unit 120, based on a predetermined condition, summarizes an evacuation model that the model receiving unit 110 received. In the present example embodiment, summarizing an evacuation model involves making a change to the evacuation model so that information and others that are unnecessary for obtaining the time required for evacuees to evacuate are excluded from the evacuation model. The summarizing unit 120 may remove the above-described unnecessary information from the evacuation model. Information subjected to summarization is determined in accordance with a predetermined condition, which will be described later.

When, another piece of information turns out to be also unnecessary for obtaining the time required for the evacuees to evacuate in summarizing the above-described unnecessary information, the summarizing unit 120 may summarize the another piece of information from the evacuation model.

In the present example embodiment, the summarizing unit 120 may summarize, for example, geographical information related to the evacuation information included in the evacuation model. In this case, geographical information subjected to summarization includes an area where evacuees may stay and a path that the evacuees may pass. The summarizing unit 120 may summarize, for example, an element and the like having little relation with evacuation routes (sites, roads and others that do not serve as an evacuation route) among the above-described geographical information.

When the evacuation model is represented by an sTPN, the summarizing unit 120 may delete, for example, a place corresponding to an area determined to be summarized. The summarizing unit 120 may also delete, for example, a transition, an input arc, and an output arc corresponding to a path determined to be summarized.

Fig. 8 illustrate an example of summarization of the evacuation sub-model relating to the evacuee E1 as described above. Fig. 8 (A) is an example of the evacuation sub-model relating to the evacuee E1. The evacuation model is the same as the evacuation sub-model illustrated in Fig. 3 (A). An evacuation sub-model that is summarized with respect to the trouble occurrence site f2 in Fig. 2 is illustrated in Fig. 8 (B). In the evacuation sub-model illustrated in Fig. 8 (B), the transition t5, which corresponds to the trouble occurrence site f2, and the arcs connected to the transition t5 are deleted.

Fig. 9 illustrate an example of summarization of the evacuation model relating to the evacuee E2 as described above. Fig. 9 (A) is an example of the evacuation sub-model relating to the evacuee E2. The evacuation model is the same as the evacuation sub-model illustrated in Fig. 3 (B). An evacuation sub-model that is obtained from summarization with respect to the path from the areas 2 to the area 4 in Fig. 5 is illustrated in Fig. 9 (B). In the evacuation sub-model illustrated in Fig. 9 (B), the transition t2, which corresponds to the path, and arcs connected to the transition t2 is deleted.

In the evacuation sub-model illustrated in Fig. 9 (B), the transitions t4 and t7, the places p2 and p4, and the paths corresponding to the arcs connecting the transitions and places have become redundant. That is, the evacuees never pass the paths when evacuating in this case. Therefore, as in a sub-model illustrated in Fig. 9(C), the elements described above may be deleted.

In the present example embodiment, the summarizing unit 120 may summarize, for example, information related to recovery information included in an evacuation model. In this case, information subjected to summarization includes an operation for recovery at a trouble occurrence site, a sequence of recovery, and the like. When the recovery sub-model is represented by an sTPN in the evacuation model, the summarizing unit 120 may delete elements of the sTPN, such as a place and a transition each corresponds to the respective operation, sequence, and the like to be summarized.

When summarizing an evacuation model, the summarizing unit 120 does not have to delete an element subjected to summarization from the evacuation model. The summarizing unit 120 may add, to the evacuation model, additional information so that the above-described element subjected to summarization are prevented from becoming an object of analysis when analyzing the evacuation model. In this case, the element subjected to summarization may be kept in the evacuation model. In one example, when the evacuation model is represented by an sTPN, the summarizing unit 120 may, for example, add a place and an input arc connected to a transition appropriately so that the transition subjected to summarization does not fire.

Fig. 10 illustrate an example of summarization of the recovery sub-model related to the evacuees E1 and E2 as described above. Fig. 10 (A) is an example of the recovery sub-model. The evacuation model is the same as the evacuation sub-model illustrated in Fig. 3 (C). The evacuation sub-model illustrated in Fig. 10 (A) is generated assuming that, with respect to the trouble occurrence sites f1 and f2 in Fig. 4 or Fig. 5, f2 is recovered first and subsequently f1 is recovered. A recovery sub-model that is obtained by summarizing information related to the trouble occurrence site f2 under the assumption that the trouble occurrence site f2 is not recovered in this case is illustrated in Fig. 10 (B). In the recovery sub-model illustrated in Fig. 10 (B), a transition t11 and places p19 and p15 that represent the recovery of f2 and the status thereof are deleted. Transitions, places, and arcs that are related to the transition t11 and places p19 and p15 are also deleted in conjunction therewith.

In the present example embodiment, the summarizing unit 120 may summarize an evacuation model based on any predetermined condition. As an example, the summarizing unit 120 may summarize an evacuation model based on a condition related to evacuation information.

In this case, the summarizing unit 120 may summarize, for example, information relating to an area, a path, and others that are distant from evacuation routes for evacuees, that is, an area and a path that the evacuees have little possibility of passing in evacuation. The areas and paths that have little possibility of being included in any evacuation route for the evacuees include an area and a path that are separated by a certain distance or more from an evacuation origin, an evacuation destination, and evacuation routes for the evacuees and an area and a path that have capacities smaller than the number of evacuees. In this case, the summarizing unit 120 may change a range of areas and paths subjected to summarization in accordance with a distance from the evacuation origin to the evacuation destination for the evacuees.

For example, when the distance from an evacuation origin to an evacuation destination for evacuees is short, a possibility that, for example, an evacuation route that follows paths in a roundabout way requires a substantially longer time as the time required for evacuation than does an evacuation route that directly connects paths from the evacuation origin to the evacuation destination, and the like, is expected. On the other hand, it is expected that, if a road or other paths in the vicinity of the evacuation origin is chosen, the evacuees are familiar with the situations of the road or other paths and there is thus little possibility of an occurrence of a problem in evacuation even when the capacity of the road or other paths is small (for example, the width of the road is small).

Therefore, in this case, the summarizing unit 120 may set a predetermined condition so that an area and a path that are located at a relatively short distance from the evacuation origin and the evacuation destination are subjected to summarization to summarize the evacuation model. The summarizing unit 120 may also set a predetermined condition so that a path with a small capacity are not subjected to summarization to summarize the evacuation model. In other words, the summarizing unit 120 sets the predetermined condition so as to include a path that has a small capacity in the evacuation paths although limiting such evacuation paths to areas and paths that are located at relatively short distances from the evacuation origin and the evacuation destination.

On the other hand, when the distance from the evacuation origin to the evacuation destination for the evacuees is long, there is a possibility that, even when an evacuation route that follows paths in a roundabout way is used, a degree of increase in time required for evacuation is smaller than in a case in which an evacuation route that directly connects paths from the evacuation origin to the evacuation destination is used. In addition, there is a possibility that a narrow road and others that are distant from the evacuation origin are relatively unsafe as an evacuation path because the evacuees are not familiar with the path, and other reasons.

Therefore, in this case, the summarizing unit 120 may set a predetermined condition so that an area and a path that are located at a relatively long distance from the evacuation origin and the evacuation destination are subjected to summarization to summarize the evacuation model. The summarizing unit 120 may also set a predetermined condition so that a road with a small capacity are subjected to summarization to summarize the evacuation model. In other words, the summarizing unit 120 sets a predetermined condition so as to limit evacuation paths to a path that has a large capacity, although the evacuation path including an area and a path located at a relatively long distance from the evacuation origin and the evacuation destination.

The summarizing unit 120 may, as another example, summarize the evacuation model based on a condition related to the recovery information. For example, the summarizing unit 120 may summarize information relating to a trouble occurrence site that has little influence on evacuation of the evacuees. The trouble occurrence site that has little influence on the evacuation of the evacuees includes, for example, a trouble occurrence site that is not included in an evacuation route for the evacuees.

A trouble occurrence site which is expected to take a long time to recover and has a possibility that the recovery thereof is not completed before the evacuees finish evacuation can be treated as the trouble occurrence site that has little influence on the evacuation of the evacuees. In other words, the summarizing unit 120 may summarize information relating to a trouble occurrence site based on the time required for each of the trouble occurrence sites to recover.

When the evacuation model is represented by an sTPN, the summarizing unit 120 may determine a trouble occurrence site subjected to summarization based on information relating to the time of a transition related to recovery from a trouble. The information relating to the time of a transition includes the values of an earliest firing time and a latest firing time of the transition and probability of firing represented by a cumulative distribution function.

Subsequently, using Fig. 11, an example of an operation of the model summarizing device 100 in the first example embodiment of the present invention will be described.

First, the model receiving unit 110 of the model summarizing device 100 receives an evacuation model that is subjected to summarization (step S 101). The model receiving unit 110 may receive such information via any inputting means and other means. The model receiving unit 110 may use information stored in any storage means, such as a memory, a disk and other devices, in advance. The model receiving unit 110 may receive such information via a network. The model receiving unit 110 may also receive a predetermined condition, which is to be used by the summarizing unit 120 later, in conjunction with the evacuation model. The received evacuation model and others are stored in a memory, storage device, and other devices which is not illustrated.

Next, the summarizing unit 120 of the model summarizing device 100 summarizes the evacuation model (step S 102). The evacuation model summarized by the summarizing unit 120 is output in any form. The evacuation model summarized by the summarizing unit 120 is stored in a memory, storage device, and other devices which is not illustrated.

The output evacuation model is used by, for example, the analysis unit 30 of the evacuation prediction system 10. Using the evacuation model, the analysis unit 30 predicts the time required for evacuees to evacuate. When a model using an sTPN is generated as the model, the analysis unit 30 may use, for example, the time required for a token in an evacuation sub-model, starting from an initial state, to reach a place representing an evacuation destination as the time required for the evacuees to evacuate. When obtaining the above-described time, the analysis unit 120 may use any state exploration algorithm for an sTPN, including known methods.

In this case, a result from the prediction by the analysis unit 30 is output in any method and form. When an sTPN is used as the model, the time required for the evacuees to evacuate is represented by, for example, a cumulative distribution function of a time at which evacuation is completed. In conjunction with the time required for the evacuees to evacuate, a portion corresponding to information summarized by the summarizing unit 120 may be indicated with the portion mapped on evacuation paths.

As described thus far, the model summarizing device 100 in the first example embodiment of the present invention summarizes an evacuation model, which is used for predicting the time required for evacuees to evacuate, based on a predetermined condition. The evacuation model being summarized into an evacuation model with a small size enables the time required to analyze the evacuation model to be shortened when the time required for evacuees to evacuate is obtained by using the evacuation model. In addition, when obtaining the time required for the evacuees to evacuate using the evacuation model, it becomes possible to analyze even if the evacuation model is complicated. Therefore, the model summarizing device 100 in the present example embodiment may make it easy to predict the time required for the evacuees to finish evacuation. The evacuation prediction system 10 including the model summarizing device 100 in the present example embodiment may, for example, perform prediction of the time required for the evacuees to finish evacuation easily in a short time.

### (Variations of First Example Embodiment)

For the model summarizing device 100 and the evacuation prediction system 10 in the present example embodiment, variations are conceivable.

For example, the model summarizing device 100 and the evacuation prediction system 10 in the present example embodiment used an sTPN as a model. However, models used by the model summarizing device 100 and the evacuation prediction system 10 are not limited to an sTPN. The model summarizing device 100 and the evacuation prediction system 10 may use any model in a form other than an sTPN as long as the model is capable of representing the evacuation information, recovery information, and other information as described above.

The respective components in the evacuation prediction system 10 may be different from those in the example illustrated in Fig. 2. For example, as an evacuation prediction system 11 illustrated in Fig. 12, a configuration that includes a model generating unit 21 into which the model generating unit 20 and the model receiving unit 110 of the model summarizing device in Fig. 2 are combined, is also applicable. In this case, the model generating unit 21 generates an evacuation model so that the summarizing unit 120 is able to summarize the evacuation model.

In this case, as an evacuation prediction system 12 illustrated in Fig. 13, a summarized model generating device 101 that includes the model generating unit 21 and the summarizing unit 120 may also be configured. In this case, the summarized model generating device 101 and the summarizing unit 120 may be achieved as a single system or as separate devices. When the summarized model generating device 101 and the summarizing unit 120 are achieved as separate devices, the summarized model generating device 101 and the summarizing unit 120 are interconnected via, for example, a wired or wireless communication network. The model summarizing device 101 and the summarizing unit 120 may exchange data representing the respective sub-models and the like with each other via a file.

The present invention was described above through example embodiments thereof, but the present invention is not limited to the above example embodiments. Various modifications that could be understood by a person skilled in the art may be applied to the configurations and details of the present invention within the scope of the present invention. The configurations in the respective example embodiments may be combined with one another without departing from the scope of the present invention.

This application claims priority based on Japanese Patent Application No. 2014-231391, filed on Nov. 14, 2014, the entire disclosure of which is incorporated herein by reference.

### [Reference signs List]

- 10, 11, 12: Evacuation prediction system
- 20, 21: Model generating unit
- 30: Analysis unit
- 100: Model summarizing device
- 101: Summarized model generating device
- 110: Model receiving unit
- 120: Summarizing unit
- 500: Information processing device
- 501: CPU
- 502: ROM
- 503: RAM
- 504: Program
- 505: Storage device
- 506: Storage medium
- 507: Drive device
- 508: Communication interface
- 509: Network
- 510: Input-output interface
- 511: Bus

## Claims

1. A model summarizing device, comprising:
model receiving means for receiving an evacuation model including evacuation information relating to an evacuation route for an evacuee, recovery information relating to recovery timing at a site where a trouble occurred on the evacuation route, and a relation between the evacuation information and the evacuation information; and
summarizing means for summarizing information included in the evacuation model based on a predetermined condition relating to the evacuation information or the recovery information.

2. The model summarizing device according to claim 1, wherein
the summarizing means summarizes geographical information related to the evacuation route.

3. The model summarizing device according to claim 2, wherein
the summarizing means summarizes geographical information related to the evacuation route based on a distance from the evacuation route.

4. The model summarizing device according to any one of claims 1 to 3, wherein
the summarizing means summarizes information relating to an operation for recovery at the site where a trouble occurred.

5. The model summarizing device according to claim 4, wherein
the summarizing means summarizes information relating to the operation for recovery based on timing relating to the operation for recovery at the site where a trouble occurred,.

6. The model summarizing device according to any one of claims 1 to 5, wherein
the summarizing means deletes the information determined to be summarized from the evacuation model.

7. The model summarizing device according to any one of claims 1 to 6, wherein
the model receiving means receives the evacuation model represented by a stochastic time Petri net.

8. An evacuation prediction system, comprising:
model generating means for generating the evacuation model based on the evacuation information, the recovery information, and a relation between the evacuation information and the recovery information;
the model summarizing device according to any one of claims 1 to 7; and
analysis means for predicting time required for the evacuee to evacuate by using the evacuation model summarized by the model summarizing device.

9. An evacuation model generating device, comprising:
model generating means for generating an evacuation model based on evacuation information relating to an evacuation route for an evacuee, recovery information relating to recovery timing at a site where a trouble occurred on the evacuation route, and a relation between the evacuation information and the recovery information; and
summarizing means for summarizing information included in the evacuation model based on a predetermined condition relating to the evacuation information or the recovery information.

10. A summarizing method, comprising:
receiving an evacuation model including evacuation information relating to an evacuation route for an evacuee, recovery information relating to recovery timing at a site where a trouble occurred on the evacuation route, and a relation between the evacuation information and the evacuation information; and
summarizing information included in the evacuation model based on a predetermined condition relating to the evacuation information or the recovery information.

11. A computer-readable recording medium storing a program, the program causing a computer to execute:
a process of receiving an evacuation model including evacuation information relating to an evacuation route for an evacuee, recovery information relating to recovery timing at a site where a trouble occurred on the evacuation route, and a relation between the evacuation information and the evacuation information; and
a process of summarizing information included in the evacuation model based on a predetermined condition relating to the evacuation information or the recovery information.
